# EUROPEAN PATENT APPLICATION

(11) **EP 0 856 756 A1**
(43) Date of publication of application: **05.08.1998**
(21) Application number: 98300748.5
(22) Date of filing: 03.02.1998
(51) Int. Cl.: G02B 6/35

(54) **Passive optical switching device**

(30) Priority: 03.02.1997 GB 9702177
(71) Applicant: OXLEY DEVELOPMENTS CO., LTD., Ulverston Cumbria LA12 9QG (GB)
(72) Inventor: Edwards, Geoffrey Stephen, Grange-Over-Sands, Cumbria, LA11 7QB (GB); Bell, Andrew John, Grange-Over-Sands, Cumbria, LA11 6BX (GB)
(74) Representative: W.P. THOMPSON & CO.

(57) **Abstract**

A passive optical switching device is disclosed, comprising a guide (2) to which at least two optical fibres (4, 6) can be coupled and at least one (and more typically several) optical switching elements (8, 10, 52) which are each received by the guide (2) and located thereby such as to be moveable between an active position, in which the switching element optically couples a pair of fibres, and an inactive position. This movement is controllable by an electromagnetic actuator (18, 20, 108). Several such switching elements may be disposed in a matrix defined by the guide. The functional components may be formed by the LIGA technique.

## Description

The present invention is concerned with optical switches for use in fibre optic applications.

Fibre optic applications require particularly tight tolerances in components to minimise the insertion loss of devices. Fibres need to be positioned accurately during assembly relative to lenses and switching elements. Conventionally, this has been achieved by active devices which seek to achieve alignment of the components by active alignment in which optical components are adjusted in the presence of a beam to ensure acceptable performance.

It is an object of the present invention to fabricate an optical switch which enables light emerging from an optical fibre to be routed through an optical matrix by one or more optical switching elements but which is passive - ie. does not require the use of the conventional active alignment techniques.

The recently developed technique of deep x-ray lithography makes possible a highly accurate, three-dimensional, micro-fabrication process and achieves minimum feature sizes of the order of 5 microns with sub-micron tolerances. Using, for example, synchrotron radiation achieves high aspect ratios and smooth vertical walls, to depths of at least 1mm, with almost complete design freedom in two dimensions.

The process involves fabrication of micro structures in a resist material cast onto a metallic substrate. A common resist used for deep x-ray lithography is the polymer PMMA, (polymethylmethacrylate). The resist coated substrate is placed behind a mask containing the required micro structure design and a scanning mechanism moves the mask and substrate through an x-ray beam, thus ensuring an even distribution of radiation across the entire resist. Deep x-ray lithography typically requires exposures of a few hours.

The masks used in deep x-ray lithography contain a planar pattern of absorbers mounted on a mechanically stable membrane which is transparent to x-rays, for example thin layers of diamond, beryllium plates and polyamide films. The requirements for a hard x-ray mask are severe because this type of radiation is highly penetrating and therefore difficult to absorb fully - consequently opaque areas of the mask comprise thick layers of a material with a high atomic number, such as 15-20 microns of gold.

A variety of micro engineering processes can be employed to manufacture a hard x-ray mask. These include ultra-violet lithography, soft x-ray lithography, electron beam ablation, focused ion beam ablation and laser ablation.

In regions where radiation is transmitted by the mask, depolymerisation occurs due to the x-ray energy breaking the molecular bonds in the resist thus increasing solubility. Washing the resist with an organic developer removes irradiated resist revealing the metallic substrate below. Developing the resist results in precisely fabricated polymer micro structures, which can either remain attached to the metallic substrate or be separated as individual components.

The resolution and accuracy of the lithographic precess is limited by diffraction effects at the edge of features on the masks. This phenomenon causes radiation to be projected under the edges of the absorber section of the mask, thus reducing the accuracy of the precess. The degree of diffraction, and therefore the severity of the undercut, is related to the wavelength of the lithographic radiation, with smaller wavelengths diffracting less thus making the lithographic process more accurate. Unfortunately, the ionising effect of shorter wavelength radiation produces more scattered electrons which break polymer bonds in the resist and so restrict accuracy.

Calculations combining these two error mechanisms indicate a minimum in deviations from the mask pattern when incident radiation has an optimum wavelength of 0.2 nanometres. Known synchrotron sources provide hard x-rays ideally suited to deep x-ray lithography and can replicate deep structures with a tolerance of 0.2 microns.

Once a resist has been developed a metallic copy can be realised through electro-deposition. This process is essentially an extended metal plating process where the substrate acts as a cathode attracting metal ions from an electrolyte into regions where resist has been removed. Material is progressively built up to form an inverse copy of the original micro structures while maintaining tight tolerances.

Terminating the electro-deposition process when metal has formed up to the top of the resist results in discrete nickel components. Continuing the process covers over the plastic structures with a solid plate and so maintains the relative positions of the micro structures. When electro-deposition is completed the substrate is separated from the deposited metal and the remaining resist is removed.

Electro-deposited micro structures function well as micro moulding and hot embossing tools, thus opening a route to volume production. These replication processes can produce a large number of micro components with tight tolerances that are not directly pattered by synchrotron radiation. The combination of deep x-ray lithography, electro-deposition and micro moulding is often referred to as the LIGA technique. This acronym is derived from the German expression "Lithogrpahie, Galvanoformung und Abformung" which refers to these three main process steps.

In accordance with a first aspect of the present invention, there is a passive optical switching device comprising a guide which is provided with means for coupling to first and second optical fibres, an optical switching element located by the guide such as to be movable between an active position in which the optical switching element serves to optically couple the first and second optical fibres and an inactive position in which it does not optically couple the fibres, and electromagnetic actuating means for selectively moving the optical switching element between the active and inactive positions.

The guide and/or the optical switching element is/are preferably manufactured using LIGA. The high accuracy provided by this technique enables motion of the switching element to be accurately constrained allowing good optical alignment thereof.

Preferably the guide is such as to permit only linear displacement of the optical switching element. An arrangement of guide rails to achieve this can be fabricated by the LIGA technique.

In one preferred embodiment, the optical switching element comprises a soft magnetic material and the electromagnetic actuating means comprise a pair of electromagnets, one of which is disposed to draw the optical switching element into the active position and the other of which is disposed to draw the optical switching element into the inactive position.

It is particularly preferred that the optical switching element is coupled to an elongate member which comprises magnetic material and which protrudes into the winding of an electromagnet, such that the optical switching element can be selectively displaced along a direction generally axial of the elongate member by the effect of the electromagnet on the optical switching element. This arrangement helps to increase the force available for moving the switching element.

The elongate member may protrude into two electromagnets on opposite sides and thus be drawable in either direction. In an alternative embodiment the elongate member is permanently magnetised such that it can be displaced into the active position by current passed through the electromagnet in a first direction and into the inactive position by current passed through the electromagnet in the opposite direction.

Preferably, the optical switching element forms a pentaprism or a pentaprism mirror. This helps to ensure that the angle through which the light beam is deflected is insensitive to small angular displacements of the switching element.

It is particularly preferred that the guide is provided with means for coupling to a first set of optical fibres and means for coupling to a second set of optical fibres, a plurality of optical switching elements being located as a matrix by the guide, each optical switching element being positioned to selectively couple an optical fibre from the first set to an optical fibre from the second set.

Advantageously, the locations of the means for coupling to the optical fibres may be staggered such that the lengths of all paths through the device are substantially the same.

In accordance with a second aspect of the present invention, there is provided a passive optical switching device comprising an optical switching element and electromagnetic actuating means for moving the optical switching element between active and inactive positions.

In accordance with a third aspect of the present invention, there is provided a passive optical switching device comprising a guide formed by deep x-ray lithography and an optical switching element displaceably located by the guide such as to be selectively movable between active and inactive positions.

A specific embodiment of the present invention will now be described, by way of example only, with reference to the accompanying figures, in which:-
Fig. 1 is a plan view of an optical switching matrix constructed in accordance with the present invention;
Fig. 2 is a side view of the optical switching matrix;
Fig. 3 is a section through the optical switching matrix taken along the line Y-Y of Fig. 2;
Fig. 4 is a section through the optical switching matrix taken along the line X-X in Fig. 2;
Fig. 5 is a perspective illustration of a further optical switching matrix which is currently the preferred embodiment of the present invention;
Fig. 6 is a plan view of a switching matrix similar to the matrix shown in Fig. 5;
Figs. 7 and 8 are enlarged plan views of details of the same switching matrix;
Fig. 9 is a simplified illustration of inputs to and outputs from a switching matrix according to the present invention;
Fig. 10 is a simplified cross-sectional view of a further switching matrix according to the present invention; and
Fig. 11 is a plan view of a switching matrix according to the present invention, including inputs and outputs.

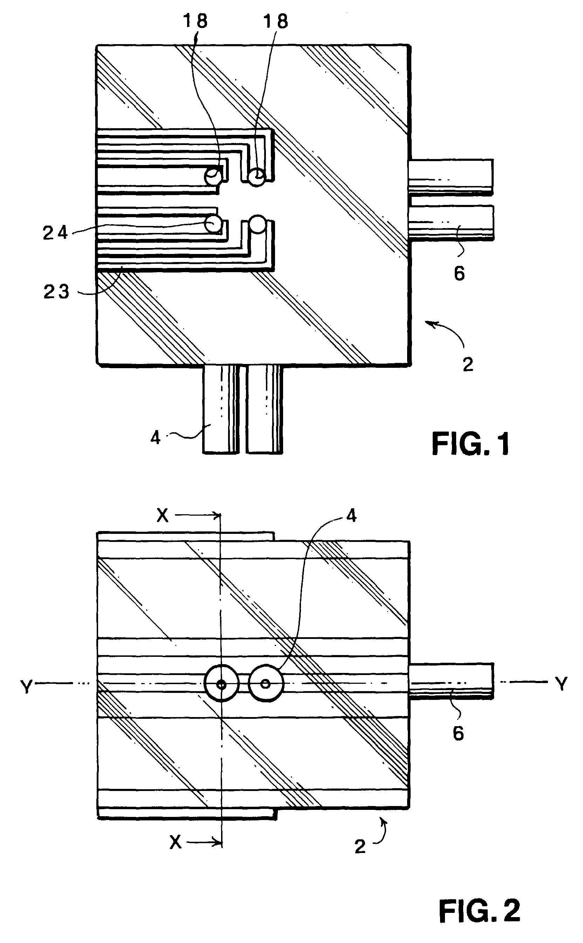

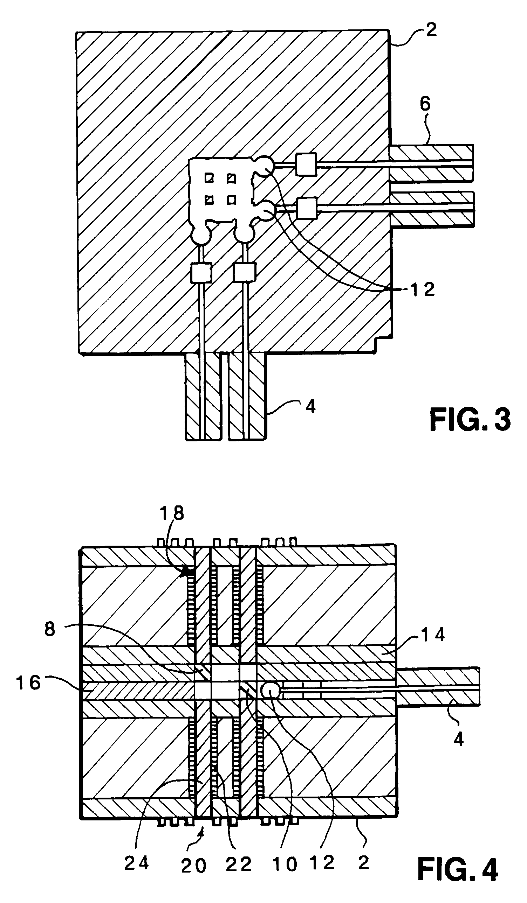

The optical switching matrix illustrated in Figs. 1 to 4, comprises a matrix block 2 which is coupled to two input optical fibres 4 and two output optical fibres 6 (the designation input/output being arbitrary). The input fibres are, according to the present embodiment, co-planar with but orthogonal to the output fibres. Optical switching elements 8, 10 displaceably mounted within the matrix block 2 can be used to optically couple either input fibre to either output fibre, as will now be described.

The optical switching elements 8, 10 are omitted from Fig. 2, but are formed as a right angled triangle in plan, each having a hypotenuse which is adapted to act as a mirror, and are formed from a nickel/iron alloy selected, inter alia, for its desirable magnetic properties, as will be explained below.

The present optical switching matrix comprises four optical switching elements, one corresponding to each input/output fibre pair.

The light input from/output to each of the optical fibres 4,6 is collimated by a respective spherical lens 12, so that enlarged beams are formed within the switching matrix.

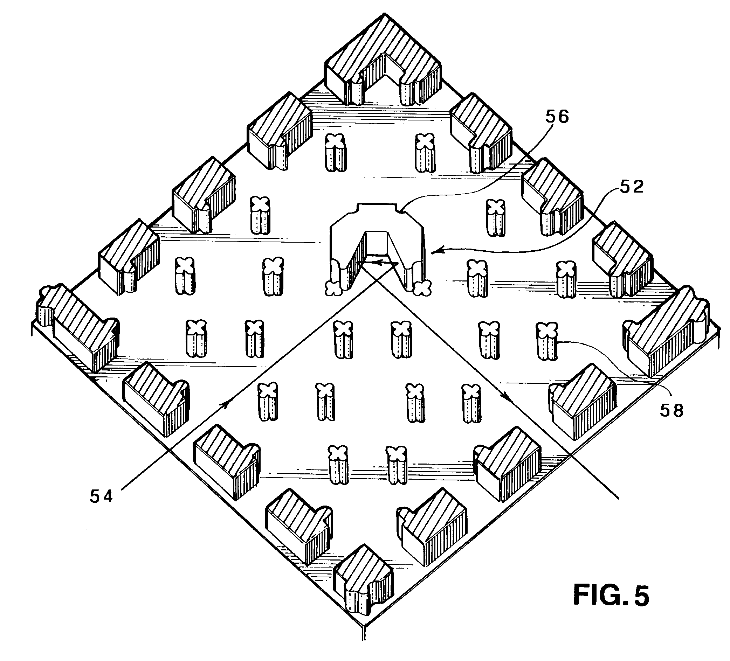

Each of the optical switching elements 8, 10 is slidably received in a pair of guide plates 14, 16 (formed by LIGA techniques) such that it can be displaced between an inactive position (see element 8 in Fig. 4) in which it lies out of the plane of the enlarged light beams within the optical switching matrix, and an active position (see element 10 in Fig. 4) in which it lies in one of the said light beams. When a given optical switching element 8, 10 is placed in the active position, its mirror face serves to reflect the enlarged light beam from a specific input through 90 degrees toward a specific output, thus optically coupling the input/output pair in question.

Accurate alignment of the optical switching elements 8, 10 is maintained by virtue of the accurate formation of the guide plates 14, 16 (made possible by the LIGA technique) which engage the elements at their vertices, allowing displacement of the elements only in one direction (the vertical direction, in Fig. 4).

To control this displacement of the optical switching elements 8, 10 each is associated with a respective pair of electromagnets 18, 20 received in the matrix block 2, a first electromagnet 18 being disposed above the element in question and a second electromagnet 20 below it, when the matrix block is orientated as shown in Fig. 4. Each electromagnet has a winding 22 to which connections can be made via circuit tracks 23 on the exterior of the matrix block 2 (see Fig. 1), and a nickel/iron core 24.

In use, a given optical switching element 8, 10 can be drawn into its inactive position by passage of a magnetising current through its corresponding first electromagnet 18 or into its active position by a passage of a current through its second electromagnet 20. The (soft magnetic) nickel iron element is attracted to the relevant electromagnet by virtue of induced magnetisation.

However, by virtue of the remnant magnetisation of the element 8, 10 and/or the core 24, the optical switching element continues to be attracted to the relevant electromagnet, and so to be retained in position, even after current to the electromagnet ceases, so that no power is required to sustain a given pattern of connections of the switching matrix.

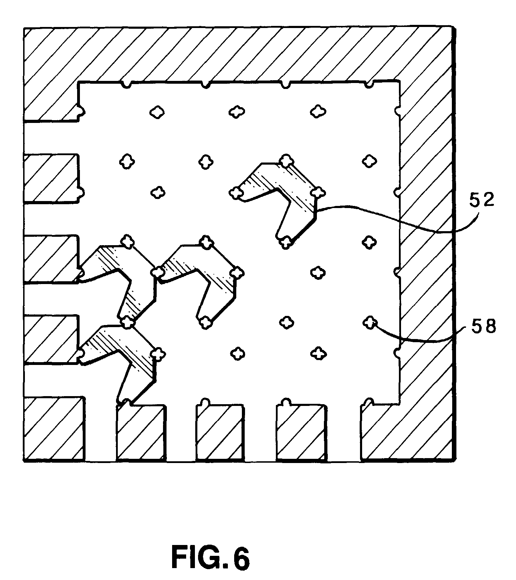

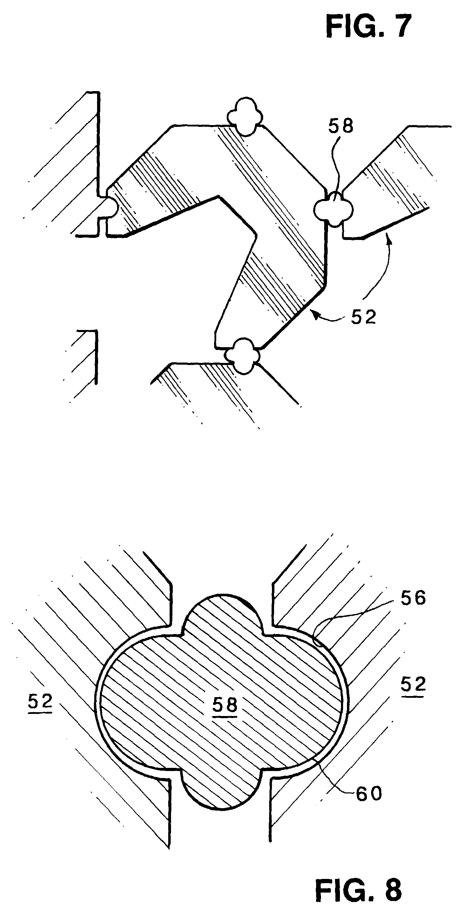

Figs. 5 to 8 show in detail the construction of the optical switching elements and guides of a further switching matrix embodying the present invention.

The optical switching element 52 is in this embodiment formed as a pentaprism mirror. It has a pair of generally opposed reflective faces, each inclined to the direction followed by input/output light. The internal angle between the two reflective faces is in this case 45 degrees. The resulting ray path is shown in Fig. 5 by arrow 54. The total resultant angle through which light is diverted between input and output (which is 90 degrees in the illustrated embodiment) is determined solely by the geometry of the pentaprism and not by the input direction, as where a simple planar mirror is used.

The optical switching element 52 is, in the present embodiment, formed from a composite material having particles of a soft magnetic material contained in a polymer matrix. An alternative way to make a switching element having appropriate magnetic properties is to form on its upper and lower surfaces a layer of suitable magnetic material.

Formed in the exterior of the optical switching element 52 are four vertical guide channels 56, most clearly seen in Fig. 8 and having a concave, semi-circular cross section.

The optical switching elements 52 are guided by a matrix of vertical guide pillars 58, the cross section of which is again most clearly seen in Fig. 8. Each pillar 58 is formed with a pair of guide rails 60 for receipt in the guide channels 56. The guide rails have a substantially semi-circular convex cross section of slightly smaller radius than the cross section of the guide channels, and extend vertically along respective, opposite, sides of the pillar.

This construction allows the optical switching elements to be moved vertically with low friction while preventing their motion in any other direction and maintaining appropriate orientation for the switching function. The components in question are all manufactured using the LIGA technique.

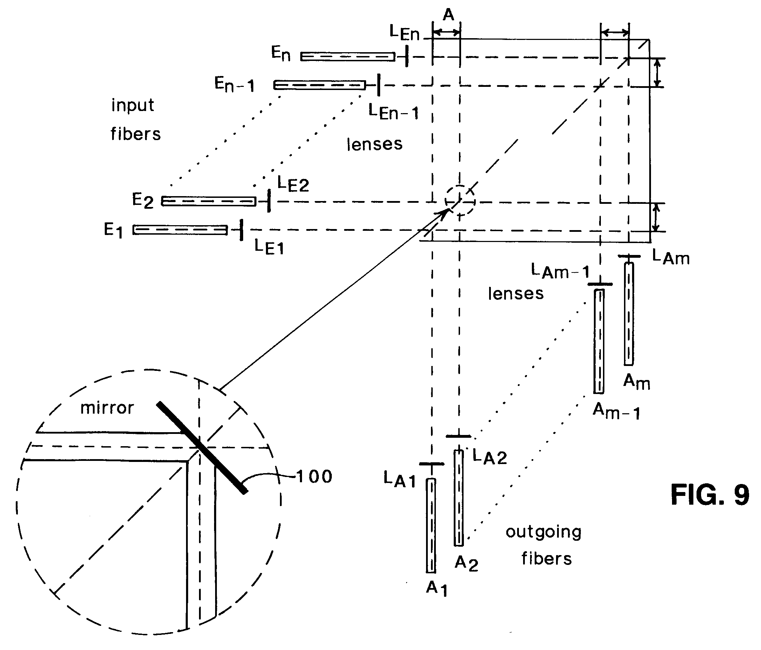

It is desirable to provide that the insertion loss (ie. the signal loss caused by the device) is the same for each possible combination of inputs and outputs. This is achieved by the embodiment schematically illustrated in Fig. 9. The switching elements of this matrix (which are shown as a planar mirror at 100 in the enlarged inset) are arranged in a square matrix, being displaced relative to their immediate neighbours by a distance D. That is, the matrix of switching elements has a period D.

Input fibres E₁...Eₙ meet the optical switching device at respective junctions L_{E1}...L_{En}, and the construction of the device is such that the positions of these junctions are staggered. That is, junction L_{En} (lying furthest from output fibres A₁...Aₘ) is disposed closest to the switching matrix. Its immediate neighbour, junction L_{En-1} is a distance D closer to the output fibres and, to compensate, is positioned a corresponding distance D further from the switching matrix; the next junction along - L_{En-2} - is a distance 2D further from the switching matrix, and so on. The output fibres A₁...Aₙ meet the optical switching device at junctions L_{A1}...L_{Am}, and are similarly staggered. The result in the illustrated embodiment is that the optical path length between each pair of input and output fibres is the same, and hence so is the corresponding insertion loss.

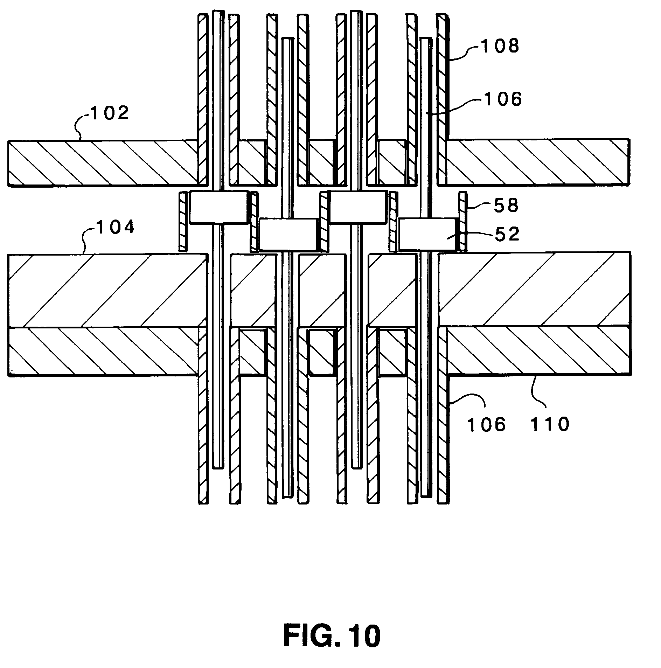

Fig. 10 illustrates a particularly preferred arrangement for magnetically actuating the optical switching elements, which are seen in cross section at 52 and are constrained to move linearly. For the sake of convenience, the axes of motion of the optical switching elements will be referred to as vertical, although in use the orientation of the switching matrix is arbitrary.

Vertical motion of the switching elements is limited by upper and lower plates 102, 104. The optical switching elements need not themselves be formed of magnetic material in the present embodiment. Instead, each is provided with a vertical pin 106 extending through the switching element. The upper part of the pin is received in a solenoid 108, formed by a copper winding on a ferrite tube and mounted in the upper plate 102. The lower part of the pin projects downward through the lower plate 104 into a solenoid 112, formed similarly to the solenoid 108 and mounted in a base plate 110 coupled to, and below, the lower plate 104.

In use, activation of the upper 108 or lower 112 solenoid causes the pin 106 to be magnetised and hence attracted in the corresponding direction, the pin and the switching element 52 thus being selectively movable.

In a variation of this embodiment, the pin is formed of magnetised hard magnetic material, allowing one of the pair of solenoids to be dispensed with. Thus, the lower solenoid 106 may be omitted, the upper solenoid 108 being energisable by current in one direction to attract the pin and cause upward motion of the switching element 52, and being energisable by current in the other direction (ie. with the opposite polarity) to repel the pin and cause downward motion.

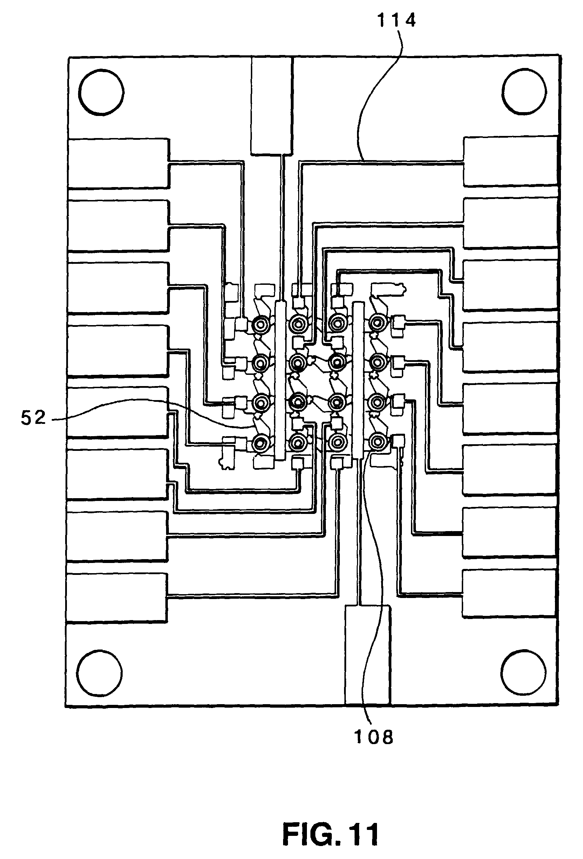

The arrangement of electrical connections 114 to the solenoids 108 is illustrated in Fig. 11.

The following are currently preferred materials for the optical switching elements and/or the structure in which they are guided and/or the guides for input/output optical fibres:
PEEK - poly ether ether ketone
PPS - polyphenylene sulphide
POM - polyoxymethylene
PC - polycarbonate.

The components may be manufactured in volume by injection moulding in moulds made using the LIGA technique.

## Claims

1. A passive optical switching device comprising a guide which is provided with means for coupling to first and second optical fibres, an optical switching element located by the guide such as to be movable between an active position in which the optical switching element serves to optically couple the first and second optical fibres and an inactive position in which it does not optically couple the fibres, and electromagnetic actuating means for selectively moving the optical switching element between the active and inactive positions.

2. A passive optical switching device as claimed in claim 1, in which the guide and/or the optical switching element is fabricated using the LIGA technique.

3. A passive optical switching device as claimed in claim 1 or claim 2, wherein the guide is such as to permit only linear displacement of the optical switching element.

4. A passive optical switching device as claimed in claim 3, wherein the optical switching element comprises a soft magnetic material and the electromagnetic actuating means comprise a pair of electromagnets, one of which is disposed to draw the optical switching element into the active position and the other of which is disposed to draw the optical switching element into the inactive position.

5. A passive optical switching device as claimed in any preceding claim, wherein the optical switching element is coupled to an elongate member which comprises magnetic material and which protrudes into the winding of an electromagnet, such that the optical switching element can be selectively displaced along a direction generally axial of the elongate member by the effect of the electromagnet on the optical switching element.

6. A passive optical switching device as claimed in claim 5, wherein the elongate member is permanently magnetised such that it can be displaced into the active position by current passed through the electromagnet in a first direction and into the inactive position by current passed through the electromagnet in the opposite direction.

7. A passive optical switching device as claimed in any preceding claim, wherein the optical switching element forms a pentaprism.

8. A passive optical switching device as claimed in any preceding claim, wherein the guide is provided with means for coupling to a first set of optical fibres and means for coupling to a second set of optical fibres, a plurality of optical switching elements being located as a matrix by the guide, each optical switching element being positioned to selectively couple an optical fibre from the first set to an optical fibre from the second set.

9. A passive optical switching device as claimed in claim 8, wherein the locations of the means for coupling to the optical fibres are staggered such that the lengths of all paths through the device are substantially the same.

10. A passive optical switching device as claimed in any preceding claim, wherein the optical switching element(s) and/or the guide are injection moulded from polymer material.

11. A passive optical switching device substantially as herein described with reference to, and as illustrated in, the accompanying drawings.
